# FASCICULE DE BREVET EUROPEEN

(11) **EP 2 909 657 B1**
(45) Date de publication et mention de la délivrance du brevet: **10.11.2021**
(21) Numéro de dépôt: 13805432.5
(22) Date de dépôt: 17.10.2013
(51) Int. Cl.: G01V 3/02, G01V 15/00, H01R 4/64, H01R 9/24, H01R 101/00

(54) **BORNE DE DÉTECTION D'UN RÉSEAU OPTIQUEMENT INVISIBLE, INSTALLATION COMPRENANT UNE TELLE BORNE DE DÉTECTION, ET PROCÉDÉ DE DÉTECTION D'UN RÉSEAU OPTIQUEMENT INVISIBLE**
ENDGERÄT ZUR ERKENNUNG EINES OPTISCH UNSICHTBAREN NETZWERKS, VORRICHTUNG MIT SOLCH EINEM ERKENNUNGSENDGERÄT UND VERFAHREN ZUR ERKENNUNG EINES OPTISCH UNSICHTBAREN NETZWERKS
TERMINAL FOR DETECTING AN OPTICALLY INVISIBLE NETWORK, APPARATUS INCLUDING SUCH A DETECTION TERMINAL, AND METHOD FOR DETECTING AN OPTICALLY INVISIBLE NETWORK

(30) Priorité: 19.10.2012 FR 1259980
(43) Date de publication de la demande: 26.08.2015
(73) Titulaire: Société Plymouth Française, 69320 Feyzin (FR)
(72) Inventeur: ARNAUD, Daniel, F-42100 Saint Etienne (FR); SAAD, Mounir, F-67000 Strasbourg (FR)
(74) Mandataire: Germain Maureau
(86) Numéro de dépôt international: PCT/FR2013/052484
(87) Numéro de publication internationale: WO 2014/060704

(56) Documents cités:
- EP-B1- 0 810 451
- BE-A1- 881 807
- DE-A1- 2 735 344
- FR-A1- 2 691 230
- FR-A1- 2 812 727
- US-A- 5 864 093
- US-A1- 2010 077 954
- None

## Description

La présente invention concerne une borne de détection d'un réseau optiquement invisible, tel qu'un réseau de gaz, d'électricité ou d'eau, une installation comprenant une telle borne de détection, et un procédé de détection d'un réseau optiquement invisible à l'aide d'une telle borne de détection.

Il importe, pour un gain de temps et de coûts mais aussi de sécurité, de pouvoir détecter la présence d'un réseau optiquement invisible, et de la localiser avec précision, sans creuser le sol, ni détruire des ouvrages, à l'occasion de travaux ultérieurs.

Plusieurs procédés peuvent être utilisés pour réaliser la détection de réseaux optiquement invisibles.

La détection par voie électromagnétique est la méthode la plus utilisée. Cette détection électromagnétique peut être effectuée à l'aide de détecteurs électromagnétiques reposant sur la détection active d'un signal électromagnétique.

Un procédé de détection active connu consiste à injecter, à l'aide d'un générateur de courant, un signal électrique dans un fil électriquement conducteur associé au réseau à identifier et disposé suivant le tracé de ce dernier, et ce via des boîtiers de connexion installés à distances régulières le long du réseau pour servir de points d'accès, et à utiliser un détecteur électromagnétique agencé pour capter un champ électromagnétique créé par un courant alternatif circulant dans le fil électriquement conducteur.

Il est connu de disposer chaque boîtier de connexion à l'intérieur d'une galerie technique ou d'un regard.

L'inconvénient d'une telle disposition des boîtiers de connexion réside dans le fait que l'accès à l'intérieur d'une galerie technique, d'un regard ou d'un coffret mural est généralement interdit au public non autorisé. Ainsi, l'injection du signal électrique permettant la détection du réseau concerné nécessite le plus souvent l'obtention d'une autorisation du propriétaire du réseau à détecter pour accéder au boîtier de connexion et/ou le déverrouillage d'un dispositif de fermeture empêchant l'accès audit boîtier de connexion à l'aide d'un organe de déverrouillage approprié. Pour certain type de réseau à détecter, la présence d'une personne habilitée pour accéder au boîtier de connexion peut également être indispensable.

En conséquence, la détection d'un réseau peut s'avérer malaisée lorsque les boîtiers de connexion sont disposés à l'intérieur de galeries techniques, de regards ou de coffrets muraux.

Afin de faciliter l'accès aux boîtiers de connexion et donc la détection de réseaux optiquement invisibles, il pourrait être envisagé de disposer les boîtiers de connexion dans des zones accessibles au public. Toutefois, une telle disposition des boîtiers de connexion pourrait engendrer des dégradations de ces derniers empêchant toute détection ultérieure du réseau correspondant.

Le document FR2691230 divulgue une borne de détection selon le préambule de la revendication 1.

La présente invention vise à remédier à ces inconvénients.

Le problème technique à la base de l'invention consiste donc à fournir une borne de détection qui soit de structure simple et économique, et qui permette une détection aisée et rapide d'un réseau optiquement invisible, telle qu'un réseau de gaz, d'électricité, de fibres optiques ou d'eau (eau pluviale, eau usée, eau potable).

A cet effet, la présente invention concerne une borne de détection selon la revendication 1.

La structure de la borne de détection selon l'invention permet d'injecter un signal électrique dans des moyens de propagation associés à un réseau optiquement invisible tout simplement en raccordant un générateur de signal électrique, tel qu'un générateur de courant, directement à la partie de protection de la borne de détection, et ce en utilisant les propriétés conductrices de la partie de protection et la continuité électrique entre la partie de protection et les moyens de connexion. Ainsi, la borne de détection selon l'invention ne nécessite pas l'intrusion dans un local ou un environnement fermé, et donc l'obtention d'une quelconque autorisation préalable du propriétaire du réseau à détecter. Il en résulte une localisation aisée et rapide du réseau optiquement invisible associé aux moyens de propagation en utilisant un détecteur électromagnétique agencé pour capter le champ électromagnétique créé par le courant alternatif circulant dans les moyens de propagation.

De plus, la présence de la partie de protection permet de protéger les moyens de connexion et de les rendre inaccessibles au public, ce qui évite tout risque d'endommagement de ces moyens de connexion et des moyens de propagation associés. Ces dispositions permettent ainsi d'assurer une fiabilité optimale de la détection du réseau optiquement invisible associé.

En outre, la structure de la borne de détection selon l'invention permet de créer un point d'injection d'un signal électrique qui est situé à proximité immédiate des coffrets de compteurs gaz ou de compteurs électriques et des armoires électriques des réseaux de gaz et d'électricité, tout en étant à l'extérieur de ces dispositifs, ce qui permet d'améliorer la sécurité de la détection du réseau optiquement invisible.

Par ouvrage, on entend notamment un trottoir, une chaussée, un mur, une trappe d'accès à une galerie technique, un tampon ou encore un regard.

Avantageusement, les moyens de connexion sont destinés à la connexion d'au moins un fil électriquement conducteur appartenant aux moyens de propagation.

Selon un mode de réalisation de l'invention, l'au moins un fil électriquement conducteur s'étend le long du réseau optiquement invisible et est agencé pour propager, en conditions d'utilisation de la borne de détection, un signal électromagnétique le long du réseau optiquement invisible. L'au moins un fil électriquement conducteur forme ainsi un fil traceur électriquement conducteur. Par exemple, l'au moins un fil électriquement conducteur peut être disposé à l'extérieur ou à l'intérieur du réseau optiquement invisible.

Selon un autre mode de réalisation de l'invention, les moyens de connexion sont destinés à la connexion d'au moins un fil électriquement conducteur relié électriquement à une pince électromagnétique qui entoure une portion du réseau optiquement invisible et qui est conformée pour induire, en conditions d'utilisation de la borne de détection, un courant électrique dans un élément électriquement conducteur s'étendant au moins en partie le long du réseau optiquement invisible. Avantageusement, l'élément électriquement conducteur forme au moins en partie le réseau optiquement invisible. Une telle pince électromagnétique est plus particulièrement utilisée lorsque le réseau optiquement invisible est un réseau d'électricité.

Selon un mode de réalisation de l'invention, la partie de protection est destinée à affleurer ou à faire saillie de la surface extérieure de l'ouvrage.

Avantageusement, la partie de protection comporte une surface de détection sensiblement plane.

Selon un mode de réalisation de l'invention, la partie de protection comprend une paroi de protection comportant une portion centrale et une portion périphérique entourant la portion centrale.

Avantageusement, la paroi de protection recouvre au moins en partie la partie de fixation, et de préférence au moins la portion centrale de la partie de fixation.

Selon un mode de réalisation de l'invention, la partie de protection est agencée pour protéger de manière étanche la partie de fixation.

De préférence, la partie de fixation est électriquement conductrice, et est reliée électriquement à la partie de protection.

Selon un mode de réalisation de l'invention, la borne de détection comporte un corps électriquement conducteur comprenant la partie de fixation et la partie de protection.

Le corps électriquement conducteur est de préférence métallique, et par exemple en fonte.

Selon un mode de réalisation de l'invention, la partie de protection et la partie de fixation sont monobloc. Avantageusement, le corps électriquement conducteur est monobloc.

Il doit être noté que les moyens de propagation, et plus particulièrement l'au moins un fil électriquement conducteur, sont avantageusement mis à la terre par l'intermédiaire du corps de la borne de détection.

La paroi de protection forme de préférence une paroi d'extrémité du corps électriquement conducteur.

De préférence, la partie de protection comprend des moyens de raccordement destinés au raccordement d'une source de signal électrique, tel qu'un générateur de signal électrique. De préférence, les moyens de raccordement sont disposés dans une zone centrale de la partie de protection. Selon un mode de réalisation de l'invention, les moyens de raccordement pour l'injection du signal électrique sont ménagés sur la paroi de protection, et par exemple sur la portion centrale de la paroi de protection.

Selon une alternative de réalisation de l'invention, le générateur de signal électrique pourrait être raccordé à la partie de protection par aimantation.

Selon un mode de réalisation de l'invention, la partie de protection comporte une platine de protection solidaire de la partie de fixation et formant la paroi de protection.

Selon un mode de réalisation de l'invention, la partie de fixation comprend une portion de liaison reliée à la portion centrale de la paroi de protection.

Selon un mode de réalisation de l'invention, la partie de fixation est agencée pour être fixée dans une chaussée, un trottoir ou encore sur une façade murale, à proximité du réseau à détecter.

Selon un mode de réalisation de l'invention, les moyens de connexion sont montés sur la partie de fixation de manière à maintenir, en condition d'utilisation, une continuité électrique entre la partie de protection et les moyens de propagation.

De façon préférentielle, les moyens de connexion sont électriquement conducteurs.

Selon un mode de réalisation de l'invention, la partie de fixation délimite deux logements, par exemple diamétralement opposés l'un à l'autre. Le ou chaque logement débouche par exemple vers l'extérieur de la partie de fixation, et de préférence sensiblement radialement vers l'extérieur de la partie de fixation.

Selon un mode de réalisation de l'invention, la partie de fixation comporte une embase opposée à la partie de protection. De préférence, l'embase délimite au moins en partie le ou chaque logement. L'embase forme par exemple en partie la paroi inférieure de chaque logement.

Selon un mode de réalisation de l'invention, l'embase s'étend sensiblement parallèlement à la paroi de protection.

Selon un mode de réalisation de l'invention, la partie de protection est dépourvue d'ouverture traversante.

Chaque logement est par exemple délimité par une paroi supérieure s'étendant sensiblement parallèlement à l'embase, deux parois latérales s'étendant sensiblement perpendiculairement la paroi supérieure, et une paroi inférieure formée par l'embase.

Avantageusement, la partie de fixation comporte au moins une ouverture de passage débouchant dans l'au moins un logement et destinée au passage d'au moins un fil électriquement conducteur appartenant aux moyens de propagation. Selon un mode de réalisation de l'invention, l'au moins une ouverture de passage est ménagée sur l'embase.

Avantageusement, les moyens de connexion comportent au moins un élément de connexion électriquement conducteur sur lequel est destiné à être connecté au moins un fil électriquement conducteur appartenant aux moyens de propagation, et de préférence à deux ou trois fils électriquement conducteurs.

L'élément de connexion comprend par exemple des moyens de pincement agencés pour pincer, en conditions d'utilisation, l'âme de l'au moins un fil électriquement conducteur. Les moyens de pincement comportent par exemple au moins une paire d'organes de pincement disposés en regard l'un de l'autre et agencés pour pincer l'âme d'un fil électriquement conducteur. Les moyens de pincement sont avantageusement mobiles entre une position de pincement du fil électriquement conducteur correspondant et une position de libération du fil électriquement conducteur. Chaque organe de pincement est formé avantageusement par une languette de pincement élastiquement déformable. Ces dispositions permettent une fixation rapide d'un fil électriquement conducteur appartenant aux moyens de propagation, et ce sans nécessiter l'utilisation d'un outil.

L'élément de connexion peut être réalisé dans le même matériau que l'âme d'un fil électriquement conducteur, et de préférence en acier inoxydable, par exemple en acier inoxydable de type 304L. L'élément de connexion est de préférence monobloc, et par exemple réalisé par emboutissage et pliage.

Selon un mode de réalisation de l'invention, l'élément de connexion comporte une partie de support sensiblement plane, et une partie en forme d'étrier s'étendant par dessus la partie de support et dont les extrémités sont solidaires de la partie de support.

Selon un mode de réalisation de l'invention, les moyens de connexion comportent deux organes de connexion électriquement conducteurs. Selon ce mode de réalisation, chaque élément de connexion est de préférence monté dans un logement différent délimité par la partie de fixation.

Le boîtier de protection est par exemple conformé pour obturer au moins en partie le logement correspondant.

Selon un mode de réalisation de l'invention, le boîtier de protection comprend des moyens d'immobilisation agencés pour immobiliser les moyens de connexion. Les moyens d'immobilisation comportent par exemple au moins un organe d'immobilisation agencé pour plaquer les moyens de connexion contre le boîtier de protection.

Selon un mode de réalisation de l'invention, le boîtier de protection prend appui contre la face supérieure de l'embase.

Le boîtier de protection est par exemple réalisé en matière plastique, et par exemple en copolymère à base de polypropylène.

Selon un mode de réalisation de l'invention, le boîtier de protection peut être translucide de manière à permettre à un opérateur de contrôler le branchement d'un fil électriquement conducteur sur les moyens de connexion.

Le boîtier de protection comporte de préférence au moins une ouverture du passage destinée au passage d'au moins un fil électriquement conducteur appartenant aux moyens de propagation.

Selon un mode de réalisation de l'invention, le boîtier de protection comporte un corps de montage sur lequel sont montés les moyens de connexion, et un capot de protection monté, par exemple de manière inamovible, sur le corps de montage.

Avantageusement, le boîtier de protection comporte des moyens de guidage agencés pour guider l'âme de l'au moins un fil électriquement conducteur lors de la connexion de l'au moins un fil électriquement conducteur sur les moyens de connexion. Les moyens de guidage comportent par exemple une portion de guidage ménagée sur le corps de montage et délimitant au moins un passage de guidage destiné à recevoir l'âme d'un fil électriquement conducteur.

Avantageusement, au moins un passage de guidage comporte une portion d'introduction évasée de manière à faciliter l'introduction dans celui-ci de l'âme du fil électriquement conducteur correspondant.

Selon un mode de réalisation de l'invention, le boîtier de protection comporte des moyens de butée agencés pour limiter la course de déplacement des organes de pincement. Les moyens de butée sont avantageusement ménagés sur le corps de montage.

De préférence, les moyens d'immobilisation et/ou de guidage sont ménagés sur le corps de montage.

Selon un mode de réalisation de l'invention, le boîtier de protection comporte des moyens de maintien agencés pour maintenir, en conditions d'utilisation, l'au moins un fil électriquement conducteur dans les moyens de guidage.

De préférence, les moyens de maintien sont ménagés sur le capot de protection. Selon un mode de réalisation de l'invention, les moyens de maintien comportent au moins un organe de maintien ménagé sur le capot de protection et disposé sensiblement en regard d'un passage de guidage.

De façon avantageuse, au moins un organe de maintien est agencé pour s'étendre à travers une lumière de passage ménagée sur l'élément de connexion.

Selon un mode de réalisation de l'invention, les moyens de guidage sont disposés sensiblement en regard d'au moins un orifice de passage prévu sur le boîtier de protection et destiné au passage de l'âme de l'au moins un fil électriquement conducteur.

Selon un mode de réalisation de l'invention, la borne de détection comprend des moyens de fixation agencés pour fixer les moyens de connexion sur la partie de fixation. Les moyens de fixation sont préférentiellement également agencés pour fixer le boîtier de protection logeant les moyens de connexion sur la partie de fixation. Les moyens de fixation sont de préférence électriquement conducteurs de manière à assurer une continuité électrique entre les moyens de connexion et la partie de fixation. Les moyens de fixation comportent par exemple au moins un organe de fixation électriquement conducteur, tel qu'une vis de fixation.

Selon un autre mode de réalisation de l'invention, les moyens de fixation sont agencés pour fixer par aimantation les moyens de connexion sur la partie de fixation.

Selon un mode de réalisation de l'invention, la borne de détection pourrait être une borne de fin de ligne.

Selon un mode de réalisation de l'invention, les parties de fixation et de protection pourraient être formées par le dormant d'une trappe d'accès, d'un regard ou d'un tampon, ou rapportées sur ledit dormant.

La présente invention concerne une installation comprenant une borne de détection selon l'invention et des moyens de propagation connectés aux moyens de connexion appartenant à la borne de détection et conformés pour propager, en conditions d'utilisation de la borne de détection, un signal électrique le long du réseau optiquement invisible.

La borne de détection est avantageusement fixée dans un ouvrage de telle sorte que la partie de protection est accessible depuis l'extérieur de l'ouvrage.

De préférence, les moyens de propagation comportent au moins un fil électriquement conducteur connecté aux moyens de connexion appartenant à la borne de détection.

Selon un mode de réalisation de l'invention, l'au moins un fil électriquement conducteur s'étend au moins en partie le long du réseau optiquement invisible.

Selon un autre mode de réalisation de l'invention, les moyens de propagation comportent en outre d'une part une pince électromagnétique qui est reliée électriquement à l'au moins un fil électriquement conducteur et qui entoure une portion du réseau optiquement invisible, et d'autre part un élément électriquement conducteur s'étendant au moins en partie le long du réseau optiquement invisible, la pince électromagnétique étant conformée pour induire, en conditions d'utilisation de la borne de détection, un courant électrique dans l'élément électriquement conducteur. Selon un mode de réalisation, l'élément électriquement conducteur forme au moins en partie le réseau optiquement invisible, ou s'étend à l'extérieur de celui-ci.

La présente invention concerne en outre un procédé de détection d'un réseau optiquement invisible, comprenant les étapes consistant à :
- prévoir une borne de détection selon l'invention,
- prévoir des moyens de propagation agencés pour propager un signal électrique, et plus particulièrement un signal électromagnétique, le long du réseau optiquement invisible,
- relier électriquement les moyens de propagation aux moyens de connexion de la borne de détection,
- fixer la partie de fixation de la borne de détection dans un ouvrage de telle sorte que la partie de protection est accessible depuis l'extérieur de l'ouvrage,
- injecter un signal électrique dans la partie de protection de la borne de détection, et
- détecter le champ électromagnétique généré par les moyens de propagation.

L'étape d'injection d'un signal électrique est de préférence réalisée à l'aide d'un générateur de signal électrique, tel qu'un générateur de courant. L'étape de détection est avantageusement réalisée à l'aide d'un détecteur électromagnétique.

Avantageusement, l'étape de fixation consiste à fixer la partie de fixation à proximité du réseau optiquement invisible à détecter. De préférence, l'étape de fixation consiste à fixer la partie de fixation à proximité d'un coffret de compteurs gaz lorsque le réseau optiquement invisible est une canalisation de gaz et à proximité d'une armoire ou d'un transformateur électrique lorsque le réseau optiquement invisible est un câble électrique.

De préférence, l'étape de fixation consiste à fixer la partie de fixation dans un trottoir, une chaussée ou encore dans un mur.

De toute façon l'invention sera bien comprise à l'aide de la description qui suit en référence au dessin schématique annexé représentant, à titre d'exemples non limitatifs, plusieurs formes d'exécution de cette borne de détection.
Figure 1 est une vue en perspective de dessous d'une borne de détection selon un premier mode de réalisation de l'invention.
Figure 2 est une vue en perspective de dessus d'un corps électriquement conducteur de la borne de détection de la figure 1.
Figure 3 est une vue en perspective de côté de la borne de détection de la figure 1 équipé de deux boîtiers de protection.
Figure 4 est une vue en perspective d'un boîtier de protection de la borne de détection de la figure 1.
Figure 5 est une vue en perspective d'un corps de montage appartenant au boîtier de protection de la figure 4.
Figure 6 est une vue en perspective du corps de montage de la figure 5 sur lequel est monté un élément de connexion appartenant à la borne de détection de la figure 1.
Figure 7 est une vue en perspective montrant la coopération entre l'élément de connexion montré à la figure 6 et un capot de protection appartenant au boîtier de protection de la figure 4.
Figure 8 est une vue partielle en perspective, à l'échelle agrandie, de l'élément de connexion montré à la figure 6.
Figure 9 est une vue partielle en perspective, à l'échelle agrandie, d'un détail de la figure 6.
Figure 10 est une vue schématique d'une première installation comprenant une borne de détection selon la figure 1 fixée au sol.
Figures 11 et 12 sont des vues en perspective de deux bornes de détection selon des deuxième et troisième modes de réalisation de l'invention.
Figure 13 est une vue schématique d'une deuxième installation comprenant une borne de détection selon la figure 11 fixée à un mur.
Figure 14 est une vue schématique d'une troisième installation comprenant une borne de détection selon la figure 1 fixée au sol.

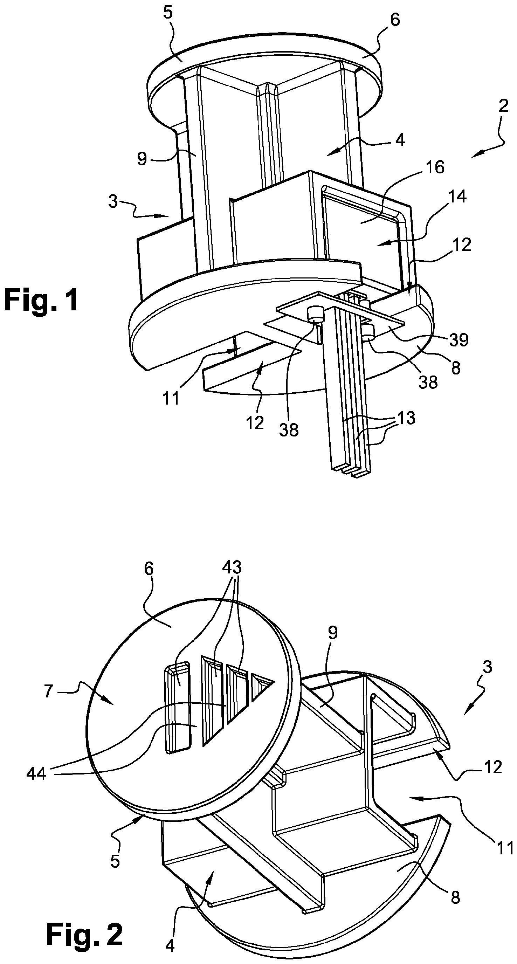

Les figures 1 à 10 représentent une borne de détection 2 d'un réseau optiquement invisible, tel qu'un réseau de gaz, d'électricité, de fibres optiques ou d'eau.

La borne de détection 2 comprend un corps 3 électriquement conducteur de préférence métallique, et par exemple réalisé en fonte. Le corps 3 est monobloc et comprend une partie de fixation 4 destinée à être fixée dans un ouvrage, et plus particulièrement dans une chaussée ou un trottoir, et une partie de protection 5 solidaire de la partie de fixation 4 et destinée à être accessible à un opérateur depuis l'extérieur de l'ouvrage. La partie de protection 5 est plus particulièrement destinée à affleurer ou à faire saillie de la surface extérieure de l'ouvrage.

La partie de protection 5 est formée par une platine de protection 6 solidaire de la partie de fixation 4. Le corps 3 est avantageusement agencé de telle sorte que la platine de protection s'étende sensiblement parallèlement à la surface extérieure de l'ouvrage.

Selon le mode de réalisation représenté sur les figures 1 à 10, la platine de protection 6 présente une forme circulaire. Cependant, la platine de protection 6 pourrait présenter une toute autre forme, par exemple carrée ou rectangulaire. La platine de protection 6 présente une surface de détection 7 opposée à la partie de fixation 4. La surface de détection 7 peut avantageusement comporter des moyens d'identification du réseau à détecter. Ces moyens d'identifications peuvent par exemple comporter des inscriptions gravées ou imprimées directement sur la surface de détection 7, ou rapportées sur celle-ci, par exemple par collage ou fixation d'un élément d'identification pourvu de ces inscriptions.

Selon le mode de réalisation représenté sur les figures 1 à 10, la partie de fixation 4 comporte une embase 8 et une portion de liaison 9 reliant l'embase 8 à la platine de protection 6. La partie de fixation 4 comporte deux logements 11 opposés l'un à l'autre et délimités chacun par la portion de liaison 9 et l'embase 8. Chaque logement 11 débouche vers l'extérieur du corps 3, et présent de préférence une forme parallélépipédique.

Comme montré sur les figures 1 et 2, l'embase 8 s'étend sensiblement parallèlement à la platine de protection 6, et comprend deux ouvertures de passage 12 débouchant chacune dans l'un des logements 11. Chaque ouverture de passage 12 est adaptée pour le passage de plusieurs fils électriquement conducteurs 13.

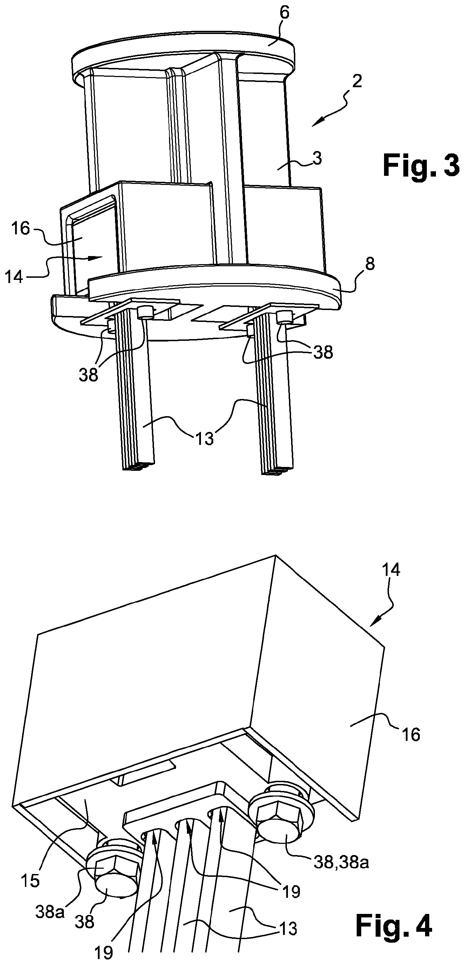

Comme montré sur les figures 1 et 4, la borne de détection 2 comprend un boîtier de protection 14 logé dans l'un des logements 11 de la partie de fixation 4. Le boîtier de protection 14 est avantageusement réalisé en un matériau électriquement non conducteur, par exemple en matière plastique. Le boîtier de protection 14 peut par exemple être translucide.

Le boîtier de protection 14 se compose d'un corps de montage 15, et d'un capot de protection 16 monté sur le corps de montage 15. Comme montré sur la figure 1, le capot de protection 16 prend appui contre la face supérieure de l'embase 8 et est conformé pour obturer en partie le logement 11 correspondant.

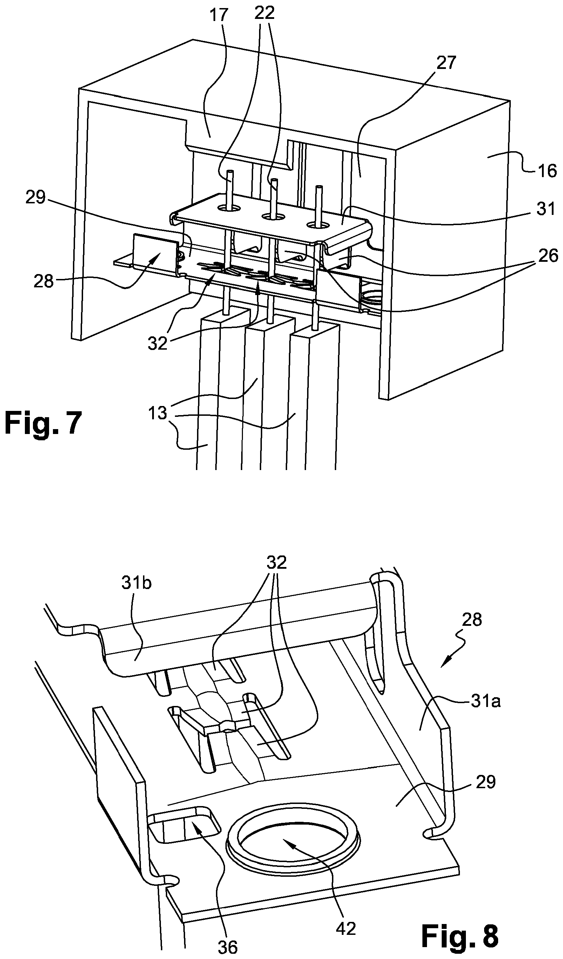

Comme montré sur la figure 7, le capot de protection 16 comprend une languette d'encliquetage 17 agencée pour coopérer avec le corps de montage 15 de manière à fixer le capot de protection 16 sur ce dernier.

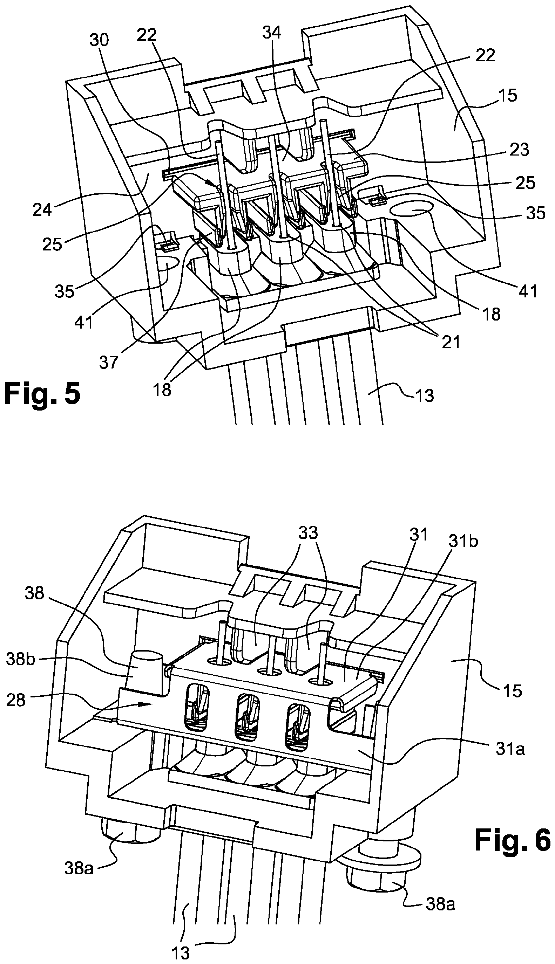

Comme montré sur les figures 4 et 5, le corps de montage 15 comporte trois portions de montage 18 délimitant chacune un logement 19 destiné à recevoir la portion d'extrémité de la gaine d'un fil électriquement conducteur 13, et trois orifices de passage 21 débouchant chacun dans l'un des logements 19 et adaptés chacun pour le passage de l'âme 22 du fil électriquement conducteur 13 correspondant. Chaque logement 19 présente avantageusement une forme complémentaire de la gaine du fil électriquement conducteur 13 correspondant. Par exemple, la gaine de chaque fil électriquement conducteur 13 et chaque logement 19 peuvent présenter une section rectangulaire.

Le corps de montage 15 comprend en outre une portion de guidage 23 s'étendant à partir de la paroi de fond 24 du corps de montage 15 et délimitant trois passages de guidage 25 débouchant chacun en regard de l'un des orifices de passage 21. Chaque passage de guidage 25 est destiné à guider l'âme 22 du fil électriquement conducteur 13 correspondant lors de l'insertion de ce dernier dans la portion de montage 18 correspondante. Avantageusement, chaque passage de guidage 25 comporte une portion d'introduction évasée de manière à faciliter l'introduction dans celui-ci de l'âme 22 du fil électriquement conducteur 13 correspondant.

Comme montré sur la figure 7, le capot de protection 16 comporte trois organes de maintien 26 s'étendant à partir de la paroi avant 27 du capot de protection 16, et agencés pour être disposés chacun en regard de l'un des passages de guidage 25 lorsque le capot de protection est monté sur le corps de montage 15. Chaque organe de maintien 26 est agencé pour maintenir, en conditions d'utilisation, l'âme 22 du fil électriquement conducteur 13 associé dans le passage de guidage 25 correspondant.

Comme montré plus particulièrement sur les figures 6 et 7, la borne de détection 2 comporte en outre un élément de connexion 28 électriquement conducteur monté dans le boîtier de protection 14. Selon le mode de réalisation représenté sur les figures 1 à 10, l'élément de connexion 28 est conformé pour la connexion de trois fils électriquement conducteurs 13.

L'élément de connexion 28 est avantageusement monobloc, et est par exemple réalisé par emboutissage et pliage. L'élément de connexion 28 est de préférence réalisé dans le même matériau que l'âme 22 de chaque fil électriquement conducteur 13, et par exemple en acier inoxydable, tel que l'acier inoxydable de type 304L.

L'élément de connexion 28 comporte une partie de support 29 sensiblement plane de forme rectangulaire, et une partie repliée 31 s'étendant par dessus la partie de support 29 et dont l'extrémité libre est engagée dans une fente 30 ménagée dans la paroi de fond 24 du corps de montage 15. La partie repliée 31 comprend de préférence une première portion 31a s'étendant sensiblement perpendiculairement à partir de la partie de support 29, et une deuxième portion 31b s'étendant à partir de la première portion 31a et sensiblement parallèlement à la partie de support 29.

L'élément de connexion 28 comprend trois paires de languettes de pincement 32 sensiblement alignées et s'étendant à partir de la partie de support 29. Comme montré plus particulièrement sur la figure 8, les languettes de pincement 32 de chaque paire sont disposées en regard l'une de l'autre et sont agencés pour pincer, en conditions d'utilisation, l'âme 22 d'un fil électriquement conducteur 13. Chaque languette de pincement 32 est élastiquement déformable entre une position de repos et une position de pincement du fil électriquement conducteur 13 correspondant.

Le corps de montage 15 comprend des moyens d'immobilisation agencés pour immobiliser l'élément de connexion 28. Les moyens d'immobilisation comportent avantageusement deux nervures d'immobilisation 33 (montrées sur la figure 6) agencés pour coopérer avec la deuxième portion 31b de la partie repliée 31 de manière à plaquer celle-ci sur une surface d'appui 34 sensiblement plane prévue sur la portion de guidage 23, et deux organe d'immobilisation 35 (montrés sur la figure 5) agencés pour coopérer chacun par encliquetage avec une lumière 36 (montrée sur la figure 8) ménagée sur la partie de support 29 de l'élément de connexion 28.

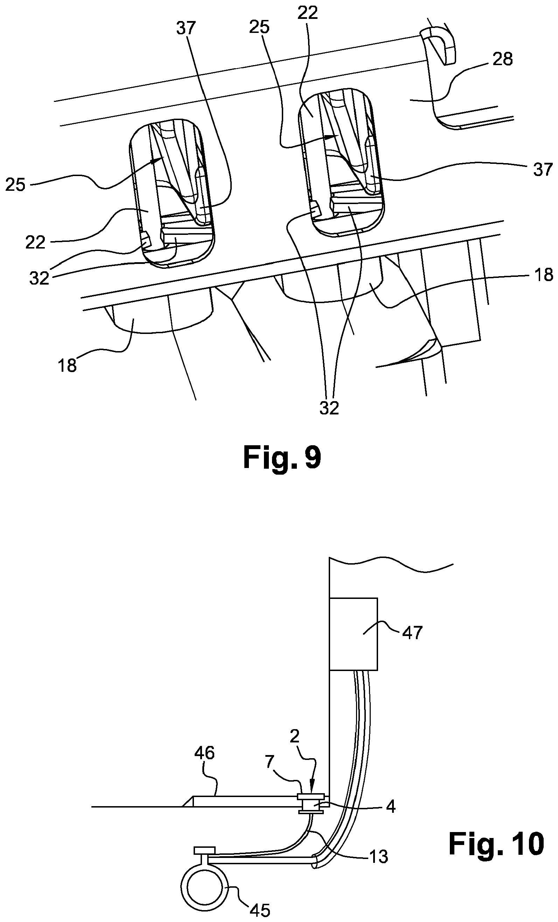

Comme montré plus particulièrement sur les figures 5 et 9, le corps de montage 15 comporte également des organes de butée 37 disposés chacun à proximité de l'une des languettes de pincement 32. Chaque organe de butée 37 est agencé pour limiter la course de déplacement de la languette de pincement 32 correspondante. Ces dispositions permettent d'éviter une déconnexion intempestive des fils électriquement conducteurs 13.

La borne de détection 2 comprend en outre deux vis de fixation 38 agencées pour fixer l'élément de connexion 28 sur la partie de fixation 4 du corps 3, et plus particulièrement sur l'embase 8 du corps 3. Les vis de fixation 38 sont métalliques de manière à assurer une continuité électrique entre l'élément de connexion 28 et le corps 3. Ainsi, en condition d'utilisation, l'élément de connexion 28 assure une continuité électrique entre le corps 3 et chaque fil électriquement conducteur 13.

Chaque vis de fixation 38 comprend une tête 38a prenant appui contre la face inférieure d'une platine de fixation 39 positionnée contre la face inférieure de l'embase 8, et un corps de vis 38b s'étendant à travers successivement un orifice de passage ménagée dans la platine de fixation 39, l'une des ouvertures de passage 12 ménagées dans l'embase 8, une ouverture de passage 41 ménagée dans le corps de montage 15, et un orifice de passage 42 ménagé sur la partie de support 29 de l'élément de connexion 28.

Selon le mode de réalisation représenté sur les figures 1 à 10, la platine de protection 6 comprend, sur sa surface de détection 7, une pluralité d'empreintes ou cavités 43 délimitant des nervures de raccordement 44 permettant l'accrochage par exemple d'une pince de raccordement électrique reliée à un générateur de courant. Ces dispositions permettent de faciliter le raccordement du générateur de courant sur le corps 3 de la borne de détection 2.

Selon une variante de mise en oeuvre de l'invention montrée sur la figure 3, la borne de détection 2 pourrait comporter deux boîtiers de protection 14 montés chacun dans l'un des logements 11 et logeant chacun un élément de connexion 28, chaque élément de connexion 28 étant alors fixé sur l'embase 8 à l'aide de deux vis de fixation 38 et étant adapté pour le raccordement de trois fils électriquement conducteur 13.

Un procédé de détection d'un réseau optiquement invisible 45, tel qu'un réseau de gaz, d'électricité, de fibres optiques ou d'eau, à l'aide d'une borne de détection 2 selon l'invention va maintenant être décrit en référence notamment à la figure 10.

Ce procédé comprend les étapes consistant à :
- prévoir une borne de détection 2 selon l'invention,
- prévoir au moins un fil électriquement conducteur 13 s'étendant le long du réseau optiquement invisible 45,
- dénuder l'une des extrémités du fil électriquement conducteur 13,
- connecter l'extrémité dénudée du fil électriquement conducteur 13 sur l'élément de connexion 28 de la borne de détection 2,
- fixer la partie de fixation 4 du corps 3 de la borne de détection 2 dans un ouvrage, tel qu'un trottoir 46 à proximité du réseau à détecter 45,
- raccorder un générateur de courant sur la surface de détection 7 de la borne de détection 2,
- injecter un signal électrique dans le corps 3 de la borne de détection 2 à l'aide du générateur de courant, et
- détecter le champ électromagnétique généré par le fil électriquement conducteur 13 à l'aide d'un détecteur électromagnétique de manière à détecter et suivre le réseau 45.

L'étape de fixation consiste avantageusement à fixer la partie de fixation 4 du corps 3 de la borne de détection 2 à proximité d'un coffret de compteurs gaz 47 lorsque que le réseau à détecter est un réseau de gaz, et à proximité d'un coffret de compteurs électriques, d'une armoire électrique ou d'un transformateur électrique lorsque le réseau à détecter est un réseau électrique.

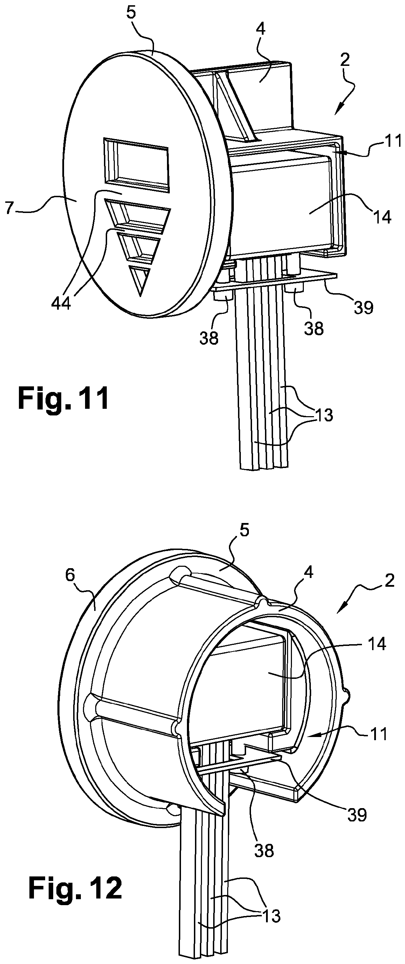

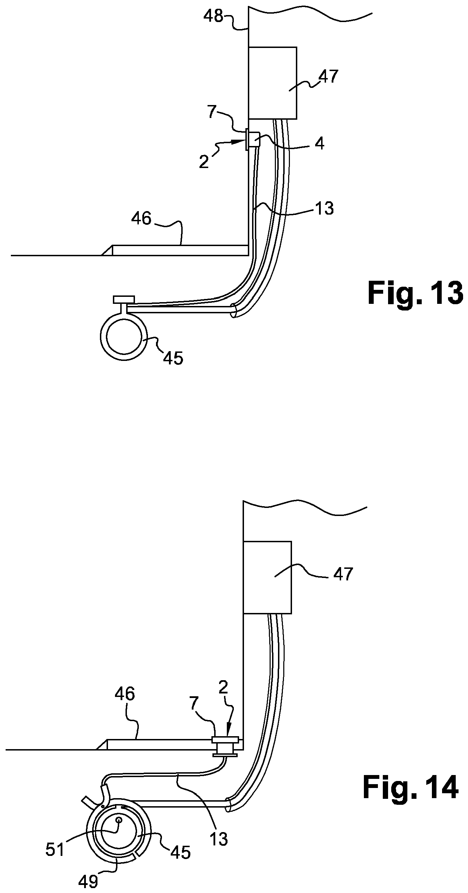

La figure 11 représente une borne de détection 2 selon un deuxième mode de réalisation de l'invention qui diffère de celui représenté sur les figures 1 à 10 essentiellement en ce que la partie de fixation 4 est dépourvue d'embase et comporte un seul logement 11. La borne de détection 2 représentée sur la figure 11 est plus particulièrement destinée à être fixée sur un mur 48, comme cela est schématisé sur la figure 13, et forme ainsi une borne de détection murale.

La figure 12 représente une borne de détection 2 selon un troisième mode de réalisation de l'invention qui diffère de celui représenté sur la figure 11 essentiellement en ce que le logement 11 débouche à l'opposé de la platine de protection 6.

Selon une variante de mise en oeuvre du procédé de détection selon l'invention schématisée plus particulièrement sur la figure 14, le fil électriquement conducteur 13 peut être relié électriquement à une pince électromagnétique 49 qui est disposée autour d'une portion du réseau optiquement invisible 45 et qui est conformée pour induire, en conditions d'utilisation de la borne de détection 2, c'est-à-dire lorsqu'un générateur de courant est raccordé à la partie de protection 5 de cette dernière, un courant électrique dans un élément électriquement conducteur 51 s'étendant au moins en partie le long du réseau optiquement invisible 46. Avantageusement, l'élément électriquement conducteur 51 forme au moins en partie le réseau optiquement invisible 46 lorsque ce dernier est un réseau d'électricité.

Comme il va de soi, l'invention ne se limite pas aux seules formes d'exécution de cette borne de détection, décrites ci-dessus à titre d'exemples, elle en embrasse au contraire toutes les variantes de réalisation, telles que déterminées par les revendications annexées.

## Revendications

1. Borne de détection (2) d'un réseau optiquement invisible (45), comportant
- une partie de fixation (4) destinée à être fixée dans un ouvrage (46),
- une partie de protection (5) solidaire de la partie de fixation (4) et agencée pour protéger la partie de fixation (4), la partie de protection (5) étant électriquement conductrice,
- des moyens de connexion destinés à la connexion de moyens de propagation agencés pour propager un signal électrique le long du réseau optiquement invisible (45), les moyens de connexion étant reliés à la partie de protection (5) de manière à maintenir, en condition d'utilisation, une continuité électrique entre la partie de protection (5) et les moyens de propagation, et
- un boîtier de protection (14) réalisé en un matériau électriquement non conducteur dans lequel sont montés les moyens de connexion,
**caractérisée en ce que** la partie de protection (5) est agencée pour être accessible depuis l'extérieur de l'ouvrage en conditions d'utilisation de la borne de détection, et **en ce que** la partie de fixation (4) délimite au moins un logement (11) dans lequel est logé le boîtier de protection (14).

2. Borne de détection (2) selon la revendication 1, dans laquelle la partie de protection (5) comprend une paroi de protection (6) comportant une portion centrale et une portion périphérique entourant la portion centrale.

3. Borne de détection (2) selon la revendication 1 ou 2, dans laquelle la partie de protection (5) comprend des moyens de raccordement (44) destinés au raccordement d'une source de signal électrique, tel qu'un générateur de signal électrique.

4. Borne de détection (2) selon l'une des revendications 1 à 3, dans laquelle la partie de fixation (4) est électriquement conductrice, et est reliée électriquement à la partie de protection (5).

5. Borne de détection (2) selon l'une des revendications 1 à 4, dans laquelle la partie de protection (5) et la partie de fixation (4) sont monobloc.

6. Borne de détection (2) selon l'une des revendications 1 à 5, dans laquelle la partie de fixation (4) comporte au moins une ouverture de passage (12) débouchant dans l'au moins un logement (11) et destinée au passage d'au moins un fil électriquement conducteur (13) appartenant aux moyens de propagation.

7. Borne de détection (2) selon l'une des revendications 1 à 6, dans laquelle la partie de fixation (4) comporte une embase (8) opposée à la partie de protection (5).

8. Borne de détection (2) selon l'une des revendications 1 à 7, dans laquelle les moyens de connexion comportent au moins un élément de connexion (28) électriquement conducteur sur lequel est destiné à être connecté au moins un fil électriquement conducteur (13) appartenant aux moyens de propagation.

9. Borne de détection (2) selon la revendication 8, dans laquelle l'élément de connexion (28) comprend des moyens de pincement agencés pour pincer, en conditions d'utilisation, l'âme (22) de l'au moins un fil électriquement conducteur (13).

10. Borne de détection (2) selon l'une des revendications 1 à 9, laquelle comprend un corps électriquement conducteur (3) comprenant la partie de fixation (4) et la partie de protection (5), la partie de protection (5) formant une paroi d'extrémité du corps électriquement conducteur (3).

11. Borne de détection (2) selon l'une des revendications 1 à 10, laquelle comprend des moyens de fixation (38) agencés pour fixer les moyens de connexion sur la partie de fixation (4).

12. Borne de détection (2) selon la revendication 11, dans laquelle les moyens de fixation (38) sont électriquement conducteurs de manière à assurer une continuité électrique entre les moyens de connexion et la partie de fixation (4).

13. Installation comprenant une borne de détection (2) selon l'une des revendications 1 à 12 et des moyens de propagation connectés aux moyens de connexion appartenant à la borne de détection (2) et conformés pour propager, en conditions d'utilisation de la borne de détection, un signal électrique le long du réseau optiquement invisible (45).

14. Procédé de détection d'un réseau optiquement invisible (45), comprenant les étapes consistant à :
- prévoir une borne de détection (2) selon l'une des revendications 1 à 12,
- prévoir des moyens de propagation (13) agencés pour propager un signal électrique le long du réseau optiquement invisible (45),
- relier électriquement les moyens de propagation (13) aux moyens de connexion de la borne de détection (2),
- fixer la partie de fixation de la borne de détection (2) dans un ouvrage (46) de telle sorte que la partie de protection (5) est accessible depuis l'extérieur de l'ouvrage,
- injecter un signal électrique dans la partie de protection de la borne de détection (2), et
- détecter le champ électromagnétique généré par les moyens de propagation (13).

## Patentansprüche

1. Endgerät (2) zur Erkennung eines optisch nicht sichtbaren Netzes (45), umfassend:
- einen Befestigungsteil (4), der dazu bestimmt ist, in einem Bauwerk (46) befestigt zu werden,
- einen Schutzteil (5), der fest mit dem Befestigungsteil (4) verbunden und so eingerichtet ist, dass er den Befestigungsteil (4) schützt, wobei der Schutzteil (5) elektrisch leitend ist,
- Verbindungsmittel, die zur Verbindung von Ausbreitungsmitteln bestimmt sind, welche so eingerichtet sind, dass sie ein elektrisches Signal entlang des optisch nicht sichtbaren Netzes (45) ausbreiten, wobei die Verbindungsmittel mit dem Schutzteil (5) verbunden sind, um im Verwendungszustand eine elektrische Kontinuität zwischen dem Schutzteil (5) und den Ausbreitungsmitteln zu halten, und
- ein Schutzgehäuse (14), das aus einem elektrisch nichtleitenden Material ausgeführt ist, in dem die Verbindungsmittel angebracht sind,
**dadurch gekennzeichnet, dass** der Schutzteil (5) so eingerichtet ist, dass er im Verwendungszustand des Erkennungsendgerätes von der Außenseite des Bauwerks her zugänglich ist, und dadurch, dass der Befestigungsteil (4) mindestens eine Aufnahme (11) begrenzt, in der das Schutzgehäuse (14) untergebracht ist.

2. Erkennungsendgerät (2) nach Anspruch 1, wobei der Schutzteil (5) eine Schutzwand (6) umfasst, die einen mittleren Abschnitt und einen Umfangsabschnitt umfasst, welcher den mittleren Abschnitt umgibt.

3. Erkennungsendgerät (2) nach Anspruch 1 oder 2, wobei der Schutzteil (5) Anschlussmittel (55) umfasst, die zum Anschluss einer elektrischen Signalquelle, wie etwa eines elektrischen Signalgenerators, bestimmt sind.

4. Erkennungsendgerät (2) nach einem der Ansprüche 1 bis 3, wobei der Befestigungsteil (4) elektrisch leitend ist und elektrisch mit dem Schutzteil (5) verbunden ist.

5. Erkennungsendgerät (2) nach einem der Ansprüche 1 bis 4, wobei der Schutzteil (5) und der Befestigungsteil (4) einstückig sind.

6. Erkennungsendgerät (2) nach einem der Ansprüche 1 bis 5, wobei der Befestigungsteil (4) mindestens eine Durchführöffnung (12) umfasst, die in der mindestens einen Aufnahme (11) mündet und zum Durchführen mindestens eines zu den Ausbreitungsmitteln gehörenden, elektrisch leitenden Drahtes (13) bestimmt ist.

7. Erkennungsendgerät (2) nach einem der Ansprüche 1 bis 6, wobei der Befestigungsteil (4) einen dem Schutzteil (5) gegenüberliegenden Sockel (8) umfasst.

8. Erkennungsendgerät (2) nach einem der Ansprüche 1 bis 7, wobei die Verbindungsmittel mindestens ein elektrisch leitendes Verbindungselement (28) umfassen, an dem mindestens ein zu den Ausbreitungsmitteln gehörender, elektrisch leitender Draht (13) verbunden werden kann.

9. Erkennungsendgerät (2) nach Anspruch 8, wobei das Verbindungselement (28) Klemmmittel umfasst, die so eingerichtet sind, dass sie im Verwendungszustand die Seele (22) des mindestens einen elektrisch leitenden Drahtes (13) einklemmen.

10. Erkennungsendgerät (2) nach einem der Ansprüche 1 bis 9, das einen elektrisch leitenden Körper (3) umfasst, der den Befestigungsteil (4) und den Schutzteil (5) umfasst, wobei der Schutzteil (5) eine Endwand des elektrisch leitenden Körpers (3) bildet.

11. Erkennungsendgerät (2) nach einem der Ansprüche 1 bis 10, das Befestigungsmittel (38) umfasst, die so eingerichtet sind, dass sie die Verbindungsmittel am Befestigungsteil (4) befestigen.

12. Erkennungsendgerät (2) nach Anspruch 11, wobei die Befestigungsmittel (38) elektrisch leitend sind, um eine elektrische Kontinuität zwischen den Verbindungsmitteln und dem Befestigungsteil (4) sicherzustellen.

13. Installation, die ein Erkennungsendgerät (2) nach einem der Ansprüche 1 bis 12 und Ausbreitungsmittel umfasst, die mit den zum Erkennungsendgerät (2) gehörenden Verbindungsmitteln verbunden sind und so ausgestaltet sind, dass sie im Verwendungszustand des Erkennungsendgerätes ein elektrisches Signal entlang des optisch nicht sichtbaren Netzes (45) ausbreiten.

14. Verfahren zum Erkennen eines optisch nicht sichtbaren Netzes (45), das die Schritte umfasst, die darin bestehen:
- ein Erkennungsendgerät (2) nach einem der Ansprüche 1 bis 12 bereitzustellen,
- Ausbreitungsmittel (13) bereitzustellen, die so eingerichtet sind, dass sie ein elektrisches Signal entlang des optisch nicht sichtbaren Netzes (45) ausbreiten,
- die Ausbreitungsmittel (13) elektrisch mit den Verbindungsmitteln des Erkennungsendgerätes (2) zu verbinden,
- den Befestigungsteil des Erkennungsendgerätes (2) so in einem Bauwerk (46) zu befestigen, dass der Schutzteil (5) von der Außenseite des Bauwerks her zugänglich ist,
- ein elektrisches Signal in den Schutzteil des Erkennungsendgerätes (2) einzuspeisen, und
- das von den Ausbreitungsmitteln (13) erzeugte elektromagnetische Feld zu erkennen.

## Claims

1. A detection terminal (2) for detecting an optically invisible network (45), including :
- a fixing portion (4) intended to be fixed in a structure (46),
- a protective portion (5) secured to the fixing portion (4) and arranged to protect the fixing portion (4), the protective portion (5) being electrically conductive,
- connection means intended to connect propagation means arranged to propagate an electric signal along the optically invisible network (45), the connection means being connected to the protective portion (5) so as to hold, when in use, an electrical continuity between the protective portion (5) and the propagation means, and
- a protective casing (14) made of an electrically non-conductive material in which the connection means are mounted,
**characterized in that** the protective portion (5) is arranged to be accessible from the outside of the structure when the detection terminal is in use, and **in that** the fixing portion (4) delimits at least one housing (11) in which is housed the protective casing (14).

2. The detection terminal (2) according to claim 1, wherein the protective portion (5) comprises a protective wall (6) including a central portion and a peripheral portion surrounding the central portion.

3. The detection terminal (2) according to claim 1 or 2, wherein the protective portion (5) comprises coupling means (44) intended to the coupling of an electric signal source, such as an electric signal generator.

4. The detection terminal (2) according to any of claims 1 to 3, wherein the fixing portion (4) is electrically conductive, and is electrically connected to the protective portion (5).

5. The detection terminal (2) according to any of claims 1 to 4, wherein the protective portion (5) and the protective casing (14) are integral.

6. The detection terminal (2) according to any of claims 1 to 5, wherein the fixing portion (4) includes at least one passage opening (12) which opens into the at least one housing (11) and intended for the passage of at least one electrically conductive wire (13) belonging to the propagation means.

7. The detection terminal (2) according to any of claims 1 to 6, wherein the fixing portion (4) includes a base (8) opposite to the protective portion (5).

8. The detection terminal (2) according to any of claims 1 to 7, wherein the connection means include at least one electrically conductive connection element (28) on which is intended to be connected at least one electrically conductive wire (13) belonging to the propagation means.

9. The detection terminal (2) according to claim 8, wherein the connection element (28) comprises clamping means arranged to clamp, when in use, the core (22) of the at least one electrically conductive wire (13).

10. The detection terminal (2) according to any of claims 1 to 9, further comprising an electrically conductive body (3) comprising the fixing portion (4) and the protective portion (5), the protective portion (5) forming an end wall of the electrically conductive body (3).

11. The detection terminal (2) according to any of claims 1 to 10, further comprising fixing means (38) arranged to fix the connection means on the fixing portion (4).

12. The detection terminal (2) according to claim 11, wherein the fixing means (38) are electrically conductive so as to ensure an electrical continuity between the connection means and the fixing portion (4).

13. An installation comprising a detection terminal (2) according to any of claims 1 to 12 and propagation means connected to the connection means belonging to the detection terminal (2) and shaped to propagate, when the detection terminal is in use, an electric signal along the optically invisible network (45).

14. A method for detecting an optically invisible network (45), comprising the steps consisting of:
- providing a detection terminal (2) according to any of claims 1 to 12,
- providing propagation means (13) arranged to propagate an electric signal along the optically invisible network (45),
- electrically connecting the propagation means (13) to the connection means of the detection terminal (2),
- fixing the fixing portion of the detection terminal (2) in a structure (46) so that the protective portion (5) is accessible from the outside of the structure,
- injecting an electric signal in the protective portion of the detection terminal (2), and
- detecting the electromagnetic field generated by the propagation means (13).
